# EUROPEAN PATENT SPECIFICATION

(11) **EP 3 159 178 B1**
(45) Date of publication and mention of the grant of the patent: **11.11.2020**
(21) Application number: 15809832.7
(22) Date of filing: 19.06.2015
(51) Int. Cl.: B60B 17/00

(54) **NOISE REDUCTION DAMPER OF VEHICLE WHEEL**
GERÄUSCHVERMINDERUNGSDÄMPFER FÜR EIN FAHRZEUGRAD
AMORTISSEUR DE RÉDUCTION DE BRUIT DE ROUE DE VÉHICULE

(30) Priority: 20.06.2014 CN 201410280528
(43) Date of publication of application: 26.04.2017
(73) Proprietor: Zhu, Qingjun, Beijing 100036 (CN)
(72) Inventor: Zhu, Qingjun, Beijing 100036 (CN)
(74) Representative: Klunker IP Patentanwälte PartG mbB
(86) International application number: PCT/CN2015/081903
(87) International publication number: WO 2015/192799

(56) References cited:
- EP-A1- 0 050 049
- EP-A1- 0 559 999
- EP-A1- 2 554 399
- EP-A2- 0 822 102
- EP-A2- 0 976 581
- CN-A- 104 354 524
- CN-A- 104 354 524
- CN-U- 201 456 920
- DE-A1- 3 120 068
- DE-C1- 3 316 759

## Description

### Field of the Invention

This invention relates to a noise-reducing damper for reducing the running noise of wheels of rail vehicle.

### Technical background

One of the current vehicle wheel noise-reducing methods is to install a damper on the wheel to absorb the vibration energy from the wheel so as to increase vibration damping, reduce noise radiation and decrease modal oscillation amplitude of the wheel. As such, the goal of reducing the running noise of the wheel can be achieved.

Noise-reducing damper is made of metal and comprised of a noise-reducing damping ring and a connector. The damper is installed in an annular groove on the wheel. In order to install this damping ring, the damping ring necessarily has an open section and a connector which is mounted in the open section is required. The patent application CN 2009 2017 9686.2 discloses a vehicle wheel noise-reducing damper comprising a damping ring with an open section, in which open section a connector is mounted, whose two ends are connected with installation holes at both ends of the open section of the damping ring. A closed ring-shaped noise-reducing damper is then constituted. However, for the connection between the connector and the ends of the open section of the damper, it is necessary to use high-strength adhesive to connect the connector and the damping ring, and the connected area is limited, which affects the connection effect, the effect of noise reduction and the safety of usage of the damper. For long-term use, the effect of noise reduction will gradually diminish and new noise may also arise as wearing occurs between the damping ring and the installation groove.

EP 0 976 581 A2 discloses a clamp system for the wheel of a rail vehicle, wherein inner vibration absorber systems are to be clamped against the inner surface of the wheel. The clamp system has at least two segments forming a ring. The ends of the neighboring segments are locked together. The segment locks each have an initial elastic tensed unit between the ends of adjacent segments to press them apart. A second force-fit tensed unit pulls the ends of the segments together against the tension of the first locking units. The second locking units adjust the gap between the segment ends and hold them together against the spreading force.

EP 2 554 399 A1 discloses a device having a metal snap ring mounted in a groove that is formed along inner radius of a rim of a metal wheel. The snap ring is formed as a single-piece part. A tightening system is connected between two ends of the snap ring in the groove to ensure mechanical coupling of the ring and the metal wheel. Holes are formed in a body of the snap ring with respect to the ends of the snap ring. The tightening system comprises a rod whose one end is inserted into one of the holes and another end is inserted into another hole.

EP 0 050 049 A1 discloses a damping ring for rotating assemblies such as a wheel or the like. The damping ring is achieved by providing an annular groove in a surface of the wheel which is coaxial with the axis of the wheel. A viscoelastic damping material subject to shear deformation during rotation of the wheel is positioned within the groove against the surface of the groove, and an annular metal ring is positioned in the groove against the viscoelastic damping material with the damping material sandwiched between the ring and the wheel.

### Summary of the invention

The object of the invention is to provide a noise-reducing damper for reducing the running noise of wheels of rail vehicle through which the shortcomings of the prior art are overcome, the running noise of the wheel is reduced and the effective connection between the damping connector and the ends of the open section of the damping ring is ensured. The noise-reducing damper of the present invention provides adequate compensation at the open section, which utilizes the centrifugal force of the spinning wheel to improve the effect of noise reduction during the running of the vehicle. It is ensured that the noise reduction effect and usage safety of the wheel can be maintained even if there is wearing in the damping ring.

In the present invention, the noise-reducing damper comprises a damping connector and a damping ring, wherein the damping ring comprises an open section, which has an inclined surface or a step surface at both ends thereof, wherein the damping connector comprises a tubular body, at both ends of which a locator is provided, respectively, wherein the tubular body has a length slightly less than the length of the open section of the damping ring and the locator comprises a cylindrical part, which is insertable into one end of the tubular body, and a wedge-shaped part, which comprises an inclined plane or a step surface cooperating with the inclined surface or the step surface at the end of the open section of the damping ring, and wherein a spring is arranged inside the tubular body, which pushes outwards the two locators at both ends of the tubular body, wherein the locator comprises a locating hole, into which a locating pin is insertable through the tubular body so as to limit the location of the locator. When the locating pin is pulled out the locator will be pushed outwards by the spring to engage the noise-reducing damping ring.

During the installation of the damper, the damping ring is installed into the groove on the wheel for receiving it so that the inclined surface or the step surface at the end of the open section of the damping ring cooperates with the inclined plane or the step surface at the end face of the damping connector. With the interacting effect occurring in the axial, radial and peripheral directions among the damping ring, the damping connector and the installation groove on the wheel, the damping ring and the damping connector are firmly attached to the wheel.

The shape of the tubular body can be manufactured to a certain degree of radian corresponding to the diameter of the damping ring so as to provide maximized noise reduction and strengthen the location of the connector itself as well as make the running of the wheel more safe and stable.

### Brief description of the drawings

Figure 1 is a schematic structural view of the damping ring in the first embodiment according to the invention;
Figure 2 is a schematic axial sectional structural view of the damping ring connector in the first embodiment according to the invention;
Figure 3 is a schematic structural view of the damping ring in the second embodiment according to the invention;
Figure 4 is a schematic axial sectional structural view of the damping ring connector in the second embodiment according to the invention;
Figure 5 is a schematic structural view of the damping ring in third embodiment according to the invention;
Figure 6 is a schematic axial sectional structural view of the damping ring connector in the third embodiment according to the invention;
Figure 7 is a schematic structural view of the damping ring in the fourth embodiment according to the invention;
Figure 8 is a schematic axial sectional structural view of the damping ring connector in the fourth embodiment according to the invention;
Figure 9 is a schematic structural view of the damping ring in the fifth embodiment according to the invention;
Figure 10 is a schematic axial sectional structural view of the damping ring connector in the fifth embodiment according to the invention;
Figure 11 is a schematic structural view of the damping ring in the sixth embodiment according to the invention; and
Figure 12 is a schematic axial sectional structural view of the damping ring connector in the sixth embodiment according to the invention.

In the Figures, the damping ring connector is of a bilaterally symmetrical structure and therefore the Figures only present half of the symmetrical structure and the other half is omitted.

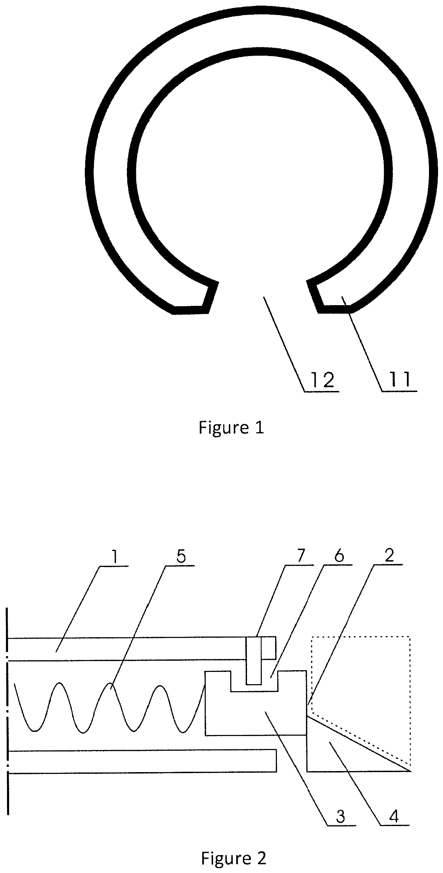

In Example 1 shown in Figures 1 and 2, the damping connector has a substantially tubular body 1 whose length is slightly less than that of an open section 12 of the damping ring. There is provided a locator 2 at both ends of the tubular body 1, respectively. The locator 2 comprises a cylindrical part 3, which is insertable into one end of the tubular body 1, and a wedge-shaped part 4, which comprises an inclined plane cooperating with an inclined surface (shown in dotted line) at the end of the damping ring. A spring 5 is arranged inside the tubular body 1, which pushes outwards the two locators 2 at both ends of the tubular body 1. The locator 2 comprises a locating hole 6, into which a locating pin 7 is inserted through the tubular body 1 so as to limit the location of the locator 2. When the locating pin 7 is pulled out, the locator 2 will be pushed outwards by the spring to engage the noise-reducing damping ring.

The damping ring 11 is an annular metal ring with a open section 12 whose both ends comprise a plane substantially in the radical direction and an inclined surface facing the outside of the damping ring, respectively.

When the damping ring 11 is installed into an installation groove (not shown in the Figures) on the wheel, the inclined surface of the damping ring engages the inclined plane at the end face of the damping connector. With the interacting effect among the damping ring, the damping connector and the installation groove of the wheel in the axial, radical and peripheral directions of the wheel, the damping ring and the damping connector are firmly attached to the wheel.

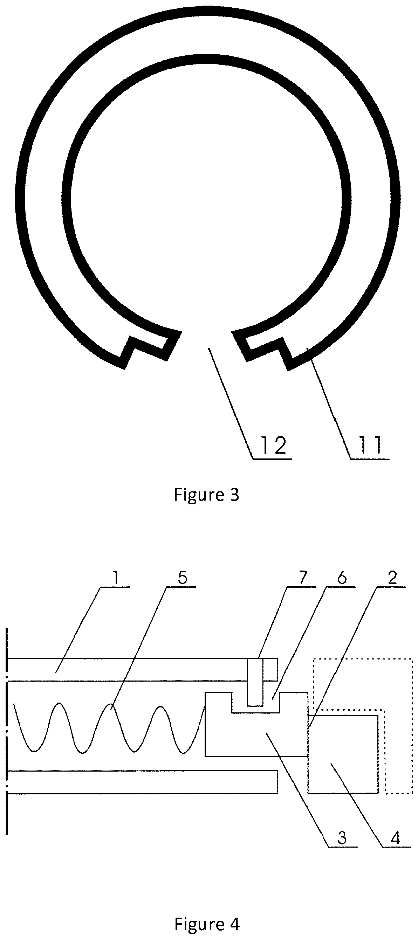

In Example 2 shown in Figures 3 and 4, the damping connector has a substantially tubular body 1 whose length is slightly less than that of an open section 12 of the damping ring. There is provided a locator 2 at both ends of the tubular body 1, respectively. The locator 2 comprises a cylindrical part 3, which is insertable into one end of the tubular body 1, and a ladder part 4, which comprises a step surface cooperating with a step surface (shown in dotted line) at the end of the damping ring. A spring 5 is arranged inside the tubular body, which pushes outwards the two locators 2 at both ends of the tubular body 1. The locator 2 comprises a locating hole 6, into which a locating pin 7 is inserted through the tubular body 1 so as to limit the location of the locator 2. When the locating pin 7 is pulled out, the locator 2 will be pushed outwards by the spring to engage the noise-reducing damping ring 11.

The damping ring 11 is an annular metal ring with a open section 12 whose both ends comprise a plane substantially in the radical direction and a step surface facing the outside of the damping ring, respectively.

When the damping ring 11 is installed into an installation groove (not shown in the Figures) on the wheel, the step surface of the damping ring engages the step surface at the end face of the damping connector. With the interacting effect among the damping ring, the damping connector and the installation groove of the wheel in the axial, radical and peripheral directions of the wheel, the damping ring and the damping connector are firmly attached to the wheel.

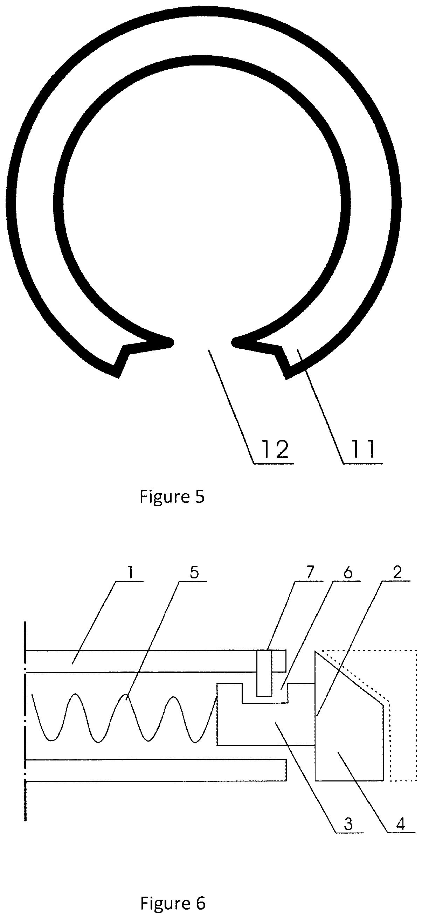

In Example 3 shown in Figures 5 and 6, the damping connector has a substantially tubular body 1 whose length is slightly less than that of an open section 12 of the damping ring. There is provided a locator 2 at both ends of the tubular body 1, respectively. The locator 2 comprises a cylindrical part 3, which is insertable into one end of the tubular body 1, and a truncated cuboid with a wedge-shaped part 4, which wedge-shaped part comprises an inclined plane cooperating with an inclined surface (shown in dotted line) at the end of the damping ring. A spring 5 is arranged inside the tubular body 1, which pushes outwards the two locators 2 at both ends of the tubular body 1. The locator 2 comprises a locating hole 6, into which a locating pin 7 is inserted through the tubular body 1 so as to limit the location of the locator 2. When the locating pin 7 is pulled out, the locator 2 will be pushed outwards by the spring to engage the noise-reducing damping ring 11.

The damping ring 11 is an annular metal ring with a open section 12 whose both ends comprise an inclined surface facing the outside of the damping ring and a plane substantially in the radical direction, respectively.

When the damping ring 11 is installed into an installation groove (not shown in the Figures) on the wheel, the inclined surface of the damping ring engages the inclined plane at the end face of the damping connector. With the interacting effect among the damping ring, the damping connector and the installation groove of the wheel in the axial, radical and peripheral directions of the wheel, the damping ring and the damping connector are firmly attached to the wheel.

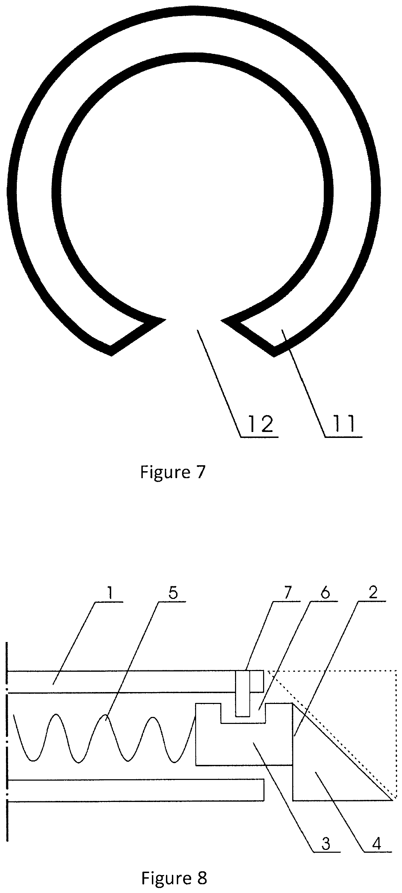

In Example 4 shown in Figures 7 and 8, the damping connector has a substantially tubular body 1 whose length is slightly less than that of an open section 12 of the damping ring. There is provided a locator 2 at both ends of the tubular body 1, respectively. The locator 2 comprises a cylindrical part 3, which is insertable into one end of the tubular body 1, and a wedge-shaped part 4, which comprises an inclined plane cooperating with an inclined surface (shown in dotted line) at the end of the damping ring. A spring 5 is arranged inside the tubular body 1, which pushes outwards the two locators 2 at both ends of the tubular body 1. The locator 2 comprises a locating hole 6, into which a locating pin 7 is inserted through the tubular body 1 so as to limit the location of the locator 2. When the locating pin 7 is pulled out, the locator 2 will be pushed outwards by the spring to engage the noise-reducing damping ring 11.

The damping ring 11 is an annular metal ring with a open section 12 whose both ends comprise an inclined surface facing the outside of the damping ring, respectively.

When the damping ring 11 is installed into an installation groove (not shown in the Figures) on the wheel, the inclined surface of the damping ring engages the inclined plane at the end face of the damping connector. With the interacting effect among the damping ring, the damping connector and the installation groove of the wheel in the axial, radical and peripheral directions of the wheel, the damping ring and the damping connector are firmly attached to the wheel.

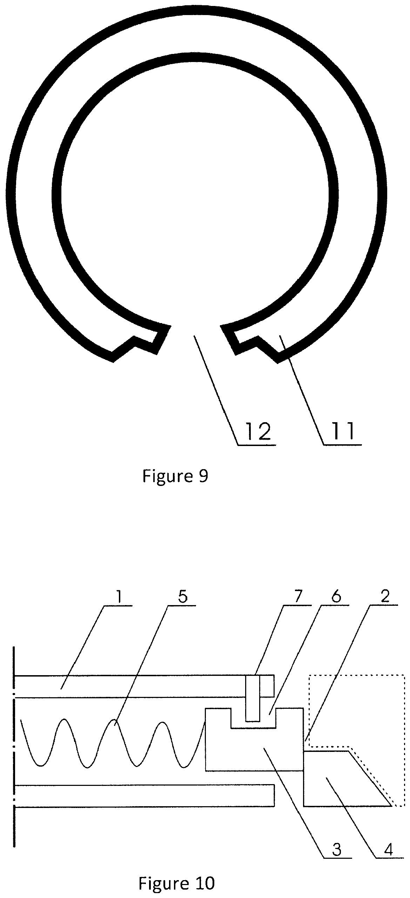

In Example 5 shown in Figures 9 and 10, the damping connector has a substantially tubular body 1 whose length is slightly less than that of an open section 12 of the damping ring. There is provided a locator 2 at both ends of the tubular body 1, respectively. The locator 2 comprises a cylindrical part 3, which is insertable into one end of the tubular body 1, and a wedge-shaped part 4, which comprises an inclined plane cooperating with an inclined surface (shown in dotted line) at the end of the damping ring. A spring 5 is arranged inside the tubular body 1, which pushes outwards the two locators 2 at both ends of the tubular body 1. The locator 2 comprises a locating hole 6, into which a locating pin 7 is inserted through the tubular body 1 so as to limit the location of the locator 2. When the locating pin 7 is pulled out, the locator 2 will be pushed outwards by the spring to engage the noise-reducing damping ring 11.

The damping ring 11 is an annular metal ring with a open section 12 whose both ends comprise an inclined plane facing the outside of the damping ring and a plane substantially in the radical direction, respectively.

When the damping ring 11 is installed into an installation groove (not shown in the Figures) on the wheel, the inclined surface of the damping ring engages the inclined plane at the end face of the damping connector. With the interacting effect among the damping ring, the damping connector and the installation groove of the wheel in the axial, radical and peripheral directions of the wheel, the damping ring and the damping connector are firmly attached to the wheel.

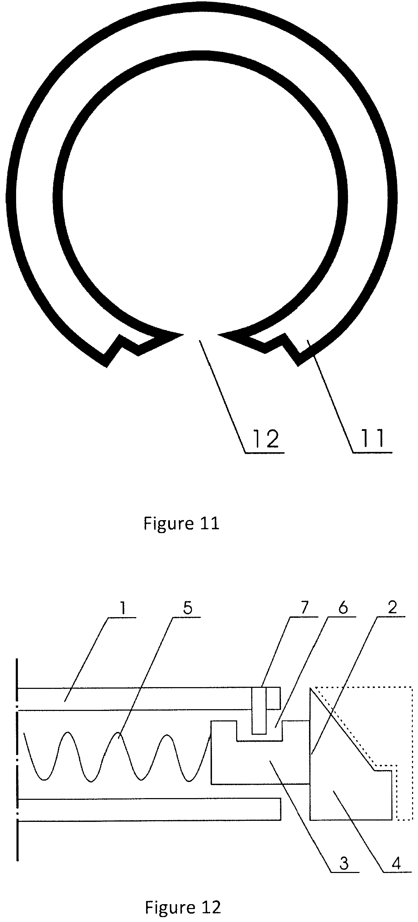

In Example 6 shown in Figures 11 and 12, the damping connector has a substantially tubular body 1 whose length is slightly less than that of an open section 12 of the damping ring. There is provided a locator 2 at both ends of the tubular body 1, respectively. The locator 2 comprises a cylindrical part 3, which is insertable into one end of the tubular body 1, and a truncated cuboid with a wedge-shaped part 4, which wedge-shaped part comprises an inclined plane cooperating with an inclined surface (shown in dotted line) at the end of the damping ring. A spring 5 is arranged inside the tubular body 1, which pushes outwards the two locators 2 at both ends of the tubular body 1. The locator 2 comprises a locating hole 6, into which a locating pin 7 is inserted through the tubular body 1 so as to limit the location of the locator 2. When the locating pin 7 is pulled out, the locator 2 will be pushed outwards by the spring to engage the noise-reducing damping ring 11.

The damping ring 11 is an annular metal ring with a open section 12 whose both ends comprise an inclined surface facing the outside of the damping ring and a step surface substantially in the radical direction, respectively.

When the damping ring 11 is installed into an installation groove (not shown in the Figures) on the wheel, the inclined surface and the step surface of the damping ring engages the inclined plane and the step surface at the end face of the damping connector. With the interacting effect among the damping ring, the damping connector and the installation groove of the wheel in the axial, radical and peripheral directions of the wheel, the damping ring and the damping connector are firmly attached to the wheel.

In the above-mentioned examples, the length of the open section 12 of the damping ring 11 is determined such that the diameter of the damping ring 11 enables the damping ring to be installed in the groove on the wheel for mounting the damping ring when both ends of the open section 12 contact with each other during mounting of the damping ring 11, or the damping ring 11 is pushed continuously into the groove for mounting the damping ring after one end of the open section 12 of the damping ring 11 is placed into the groove.

In the above-mentioned examples, the tubular body 1 can be designed such that it has the same degree of radial and/or axial curvature as those of the installation groove on the wheel for the damping ring.

In the invention, one of the two locators 2 can be fixedly attached to one end of the tubular body 1 or can be formed integrally with the tubular body 1.

## Claims

1. A damper for reducing the running noise of wheels of rail vehicle, comprising a damping connector and a damping ring (11), **characterized in that** the damping ring (11) comprises an open section (12), which has an inclined surface at both ends thereof, and that the damping connector comprises a tubular body (1), at both ends of which a locator (2) is provided, respectively, wherein the tubular body (1) has a length slightly less than the length of the open section (12) of the damping ring (11) and the locator (1) comprises a cylindrical part (3), which is insertable into one end of the tubular body (1), and a wedge-shaped part (4), which comprises an inclined plane cooperating with the inclined surface at the end of the open section of the damping ring (11), wherein a spring (5) is arranged inside the tubular body (1), which pushes outwards the two locators (2) at both ends of the tubular body (1).

2. A damper for reducing the running noise of wheels of rail vehicle, comprising a damping connector and a damping ring (11), **characterized in that** the damping ring (11) comprises an open section (12), which has a step surface at both ends thereof, and that the damping connector comprises a tubular body (1), at both ends of which a locator (2) is provided, respectively, wherein the tubular body (1) has a length slightly less than the length of the open section (12) of the damping ring (11) and the locator (1) comprises a cylindrical part (3), which is insertable into one end of the tubular body (1), and a wedge-shaped part (4), which comprises a step plane cooperating with the step surface at the end of the open section of the damping ring (11), wherein a spring (5) is arranged inside the tubular body (1), which pushes outwards the locators (2) at both ends of the tubular body (1).

3. The damper for reducing the running noise of wheels of rail vehicle according to claim 1 or 2, wherein the locator (2) comprises a locating hole (6), into which a locating pin (7) is insertable through the tubular body (1).

4. The damper for reducing the running noise of wheels of rail vehicle according to claim 1 or 2, wherein one of the two locators (2) is fixedly attached to one end of the tubular body (1).

5. The damper for reducing the running noise of wheels of rail vehicle according to claim 1 or 2, wherein the tubular body (1) has the same peripheral and/or axial curvatures with a groove on the wheel for mounting the damping ring (11).

## Patentansprüche

1. Dämpfer zur Reduzierung der Laufgeräusche von Rädern eines Schienenfahrzeugs, umfassend einen Dämpfungsverbinder und einen Dämpfungsring (11), **dadurch gekennzeichnet, daß** der Dämpfungsring (11) einen offenen Abschnitt (12) umfasst, der an seinen beiden Enden eine geneigte Fläche hat, und daß der Dämpfungsverbinder einen rohrförmigen Körper (1) umfasst, an dessen beiden Enden jeweils eine Positioniervorrichtung (2) vorgesehen ist, wobei der rohrförmige Körper (1) eine Länge aufweist, die geringfügig kleiner ist als die Länge des offenen Abschnitts (12) des Dämpfungsrings (11), und die Positioniervorrichtung (1) einen zylindrischen Teil (3), der in ein Ende des rohrförmigen Körpers (1) einführbar ist, und einen keilförmigen Teil (4) aufweist, der eine geneigte Ebene aufweist, die mit der geneigten Fläche am Ende des offenen Abschnitts des Dämpfungsrings (11) zusammenwirkt, wobei eine Feder (5) im Inneren des rohrförmigen Körpers (1) angeordnet ist, die die beiden Positioniervorrichtungen (2) an beiden Enden des rohrförmigen Körpers (1) nach außen drückt.

2. Dämpfer zur Reduzierung der Laufgeräusche von Rädern eines Schienenfahrzeugs, umfassend einen Dämpfungsverbinder und einen Dämpfungsring (11), **dadurch gekennzeichnet, daß** der Dämpfungsring (11) einen offenen Abschnitt (12) aufweist, der an seinen beiden Enden eine Stufenfläche aufweist, und daß der Dämpfungsverbinder einen rohrförmigen Körper (1) aufweist, an dessen beiden Enden jeweils eine Positioniervorrichtung (2) vorgesehen ist, wobei der rohrförmige Körper (1) eine Länge aufweist, die geringfügig kleiner ist als die Länge des offenen Abschnitts (12) des Dämpfungsrings (11), und die Positioniervorrichtung (1) einen zylindrischen Teil (3), der in ein Ende des rohrförmigen Körpers (1) einführbar ist, und einen keilförmigen Teil (4) aufweist, die eine Stufenebene aufweist, die mit der Stufenfläche am Ende des offenen Abschnitts des Dämpfungsrings (11) zusammenwirkt, wobei eine Feder (5) innerhalb des rohrförmigen Körpers (1) angeordnet ist, die die Positioniervorrichtungen (2) an beiden Enden des rohrförmigen Körpers (1) nach außen drückt.

3. Dämpfer zur Reduzierung der Laufgeräusche von Rädern eines Schienenfahrzeugs nach Anspruch 1 oder 2, wobei die Positioniervorrichtung (2) ein Positionierungsloch (6) umfasst, in das ein Positionierungsstift (7) durch den rohrförmigen Körper (1) einführbar ist.

4. Dämpfer zur Reduzierung der Laufgeräusche von Rädern eines Schienenfahrzeugs nach Anspruch 1 oder 2, wobei eine der beiden Positioniervorrichtungen (2) fest mit einem Ende des rohrförmigen Körpers (1) verbunden ist.

5. Dämpfer zur Reduzierung der Laufgeräusche von Rädern eines Schienenfahrzeugs nach Anspruch 1 oder 2, wobei der rohrförmige Körper (1) die gleichen peripheren und/oder axialen Krümmungen mit einer Nut am Rad zur Befestigung des Dämpfungsrings (11) aufweist.

## Revendications

1. Amortisseur pour réduire le bruit de fonctionnement de roues de véhicule ferroviaire, comprenant un connecteur d'amortissement et un anneau d'amortissement (11), **caractérisé en ce que** l'anneau d'amortissement (11) comprend une section ouverte (12), laquelle présente une surface inclinée sur ses deux extrémités, et **en ce que** le connecteur d'amortissement comprend un corps tubulaire (1), sur lequel un moyen de positionnement (2) est prévu respectivement sur les deux extrémités, dans lequel le corps tubulaire (1) présente une longueur légèrement inférieure à la longueur de la section ouverte (12) de l'anneau d'amortissement (11), et le moyen de positionnement (1) comprend une partie cylindrique (3), laquelle peut être introduite dans une extrémité du corps tubulaire (1), et une partie en forme de cale (4), laquelle comprend un plan incliné coopérant avec la surface inclinée sur l'extrémité de la section ouverte de l'anneau d'amortissement (11), dans lequel un ressort (5) est agencé dans le corps tubulaire (1), lequel pousse vers l'extérieur les deux moyens de positionnement (2) sur les deux extrémités du corps tubulaire (1).

2. Amortisseur pour réduire le bruit de fonctionnement de roues de véhicule ferroviaire, comprenant un connecteur d'amortissement et un anneau d'amortissement (11), **caractérisé en ce que** l'anneau d'amortissement (11) comprend une section ouverte (12), laquelle présente une surface échelonnée sur ses deux extrémités, et **en ce que** le connecteur d'amortissement comprend un corps tubulaire (1), sur lequel un moyen de positionnement (2) est prévu respectivement sur les deux extrémités, dans lequel le corps tubulaire (1) présente une longueur légèrement inférieure à la longueur de la section ouverte (12) de l'anneau d'amortissement (11), et le moyen de positionnement (1) comprend une partie cylindrique (3), laquelle peut être introduite dans une extrémité du corps tubulaire (1), et une partie en forme de cale (4), laquelle comprend un plan échelonné coopérant avec la surface échelonnée sur l'extrémité de la section ouverte de l'anneau d'amortissement (11), dans lequel un ressort (5) est agencé dans le corps tubulaire (1), lequel pousse vers l'extérieur les moyens de positionnement (2) sur les deux extrémités du corps tubulaire (1).

3. Amortisseur pour réduire le bruit de fonctionnement de roues de véhicule ferroviaire selon la revendication 1 ou 2, dans lequel le moyen de positionnement (2) comprend un trou de positionnement (6), dans lequel une broche de positionnement (7) peut être introduite à travers le corps tubulaire (1).

4. Amortisseur pour réduire le bruit de fonctionnement de roues de véhicule ferroviaire selon la revendication 1 ou 2, dans lequel l'un des deux moyens de positionnement (2) est attaché à demeure sur une extrémité du corps tubulaire (1).

5. Amortisseur pour réduire le bruit de fonctionnement de roues de véhicule ferroviaire selon la revendication 1 ou 2, dans lequel le corps tubulaire (1) présente les mêmes courbures périphériques et/ou axiales qu'une rainure sur la roue pour le montage de l'anneau d'amortissement (11).
